# EUROPÄISCHE PATENTSCHRIFT

(11) **EP 1 433 244 B1**
(45) Veröffentlichungstag und Bekanntmachung des Hinweises auf die Patenterteilung: **09.02.2005**
(21) Anmeldenummer: 02776683.1
(22) Anmeldetag: 17.09.2002
(51) Int. Cl.: H02M 3/07

(54) **WANDLERSCHALTUNG**
CONVERTER MOUNTING
MONTAGE D'UN CONVERTISSEUR

(30) Priorität: 25.09.2001 DE 10147168
(43) Veröffentlichungstag der Anmeldung: 30.06.2004
(73) Patentinhaber: SIEMENS AKTIENGESELLSCHAFT, 80333 München (DE)
(72) Erfinder: BACHMAIER, Georg, 80538 München (DE); FISCHER, Bernhard, 84513 Töging A. Inn (DE); KAPPEL, Andreas, 85649 Brunnthal (DE); ULIVIERI, Enrico, 81541 München (DE)
(86) Internationale Anmeldenummer: PCT/DE2002/003496
(87) Internationale Veröffentlichungsnummer: WO 2003/028196

(56) Entgegenhaltungen:
- DE-A- 19 505 417
- DE-A- 19 714 610
- US-A- 4 736 151
- US-A- 5 057 986
- US-A1- 2001 020 804
- SU-HO LEE ET AL: "Piezoelectric transformer for power converter operating at high frequency" 1999 IEEE ULTRASONICS SYMPOSIUM. PROCEEDINGS. INTERNATIONAL SYMPOSIUM (CAT. NO.99CH37027), 1999 IEEE ULTRASONICS SYMPOSIUM. PROCEEDINGS. INTERNATIONAL SYMPOSIUM, CAESARS TAHOE, NV, USA, 17-20 OCT. 1999, Seiten 767-772 vol.1, XP002241057 1999, Piscataway, NJ, USA, IEEE, USA ISBN: 0-7803-5722-1

## Beschreibung

Die Erfindung betrifft eine Wandlerschaltung mit einer Speicherinduktivität, die mit einem Ende mit einem Referenzpotential verbunden ist und die am entgegengesetzten Ende eingangsseitig an einen Netzanschluss und ausgangsseitig an eine sekundäre Speicherkapazität angeschlossen ist, die ausgangsseitig mit dem Referenzpotential verbunden ist.

Aufgrund des dringenden Bedarfs nach kraftstoffsparenden Motoren werden derzeit direkteinspritzende Ottomotoren mit mageren Brennverfahren entwickelt, da bei diesen Motoren gegenüber herkömmlichen auf λ = 1 geregelten Motoren mit direkter Einspritzung des Kraftstoffes in das Saugrohr eine mittlere Kraftstoffeinsparung von bis zu 15 % zu erwarten ist. Unter Teillast wird im Brennraum eine Ladungsschichtung vorgenommen. Dies bedeutet, dass der Brennraum in zwei Zonen aufgeteilt wird: eine erste Zone mit einem zündfähigen KraftstoffLuftgemisch in Zündkerzennähe und eine zweite Zone aus Luft und Restgas, die die erste Zone umgibt und thermisch gegen die Wände des Brennraums isoliert. Die Schichtladung bedingt einen äußerst späten Einspritzzeitpunkt während der Verdichtungsphase des Motors und eine extrem kurze Einspritzzeit von typischerweise 0,5 ms. Mit wachsender Motorlast erfolgt der Übergang in den homogenen Betrieb. Dabei wird der Kraftstoff bereits während der Ansaugphase, also sehr früh, eingespritzt, um eine gute Durchmischung von Luft und Kraftstoff zu gewährleisten.

Besonders vorteilhaft ist es , zum Betätigen der Einspritzventile Piezoaktoren oder andere in Mehrschichttechnik gefertigte elektrostriktive Aktoren heranzuziehen, da diese nahezu verzögerungsfrei reagieren. Diese Piezoaktoren oder in Mehrschichttechnik gefertigten elektrostriktiven Aktoren weisen einen Schichtstapel aus einem Material auf, dessen Ausdehnung sich beim Anlegen einer äußeren Spannung in Längsrichtung ändert. Mit Piezoaktoren oder elekrostriktiven Aktoren betätigte Einspritzventile lassen sich unabhängig von der Kolbenbewegung steuern und weisen darüber hinaus den Vorzug auf, dass sich mit ihnen kurze Schaltzeiten realisieren lassen.

Schaltungstechnisch stellt ein Piezoaktor eine Kapazität dar, die durch eine anliegende äußere elektrische Spannung aufgeladen wird. Dabei wird Energie im Piezoaktor gespeichert. Da der Piezoaktor bei Einspritzanwendungen typischerweise mit Frequenzen zwischen 10 und 500 Hz aufgeladen und entladen wird, besteht ein Interesse daran, die im Piezoaktor gespeicherte Energie beim Entladen des Piezoaktors zurückzugewinnen. Es werden daher Schaltungen benötigt, mit deren Hilfe sich ein Piezoaktor möglichst verlustfrei betätigen lässt. Dies gilt selbstverständlich auch für die elektrostriktiven Aktoren.

Aus Tietze, Schenk, "Halbleiter-Schaltungstechnik, 9. Auflage, Seite 563" ist ein invertierender Wandler bekannt, der eine Speicherdrossel umfasst, die mit ihrem einem Ende an Masse angeschlossen ist. Mit ihrem entgegengesetzten Ende ist die Speicherdrossel mit einem Schalter verbunden, der das entgegengesetzte Ende der Speicherdrossel wechselweise mit einem Eingang und einem Ausgang verbindet. An dem Ausgang ist parallel zum Wechselschalter und zur Speicherdrossel ein Glättungskondensator geschaltet. Falls die Speicherdrossel über den Wechselschalter mit dem an eine Stromquelle angeschlossen Eingang verbunden ist, fließt durch die Speicherdrossel ein Drosselstrom, der auch dann seine Richtung beibehält, wenn der Wechselschalter zum Ausgang umschaltet. Durch den weiterhin fließenden Drosselstrom wird dann der Glättungskondensator bei positiver Eingangsspannung auf negative Spannungswerte aufgeladen.

Eine Rückübertragung der im Glättungskondensator oder Verbraucher gespeicherten Energie auf die Stromquelle ist mit der bekannten Schaltung jedoch nicht möglich.

Ausgehend von diesem Stand der' Technik liegt der Erfindung die Aufgabe zugrunde, eine Wandlerschaltung zu schaffen, mit der sich die in der sekundären Speicherkapazität gespeicherte Energie wenigstens teilweise zurückgewinnen lässt.

Diese Aufgabe wird erfindungsgemäß dadurch gelöst, dass der Speicherinduktivität eingangsseitig eine primäre Speicherkapazität vorgeschaltet ist, die eingangsseitig über ein primäres Schaltelement mit dem Referenzpotential verbindbar ist, und dass die sekundäre Speicherkapazität in Reihe mit einem sekundären Schaltelement geschaltet ist.

Gemäß der Erfindung wird eingangsseitig eine zusätzliche primäre Speicherkapazität angeordnet. Auf diese primäre Speicherkapazität kann die in der sekundären Speicherkapazität gespeicherte Energie wenigstens teilweise zurückübertragen werden. Insbesondere ist es möglich, durch kurzzeitiges Schließen des sekundären Schaltelements einen Strom über die Speicherinduktivät und die sekundäre Speicherkapazität aufzubauen, der bei dem kurz darauffolgenden Öffnen des sekundären Schaltelements weiterfließt und dadurch die primäre Speicherkapazität auflädt. Dadurch wird die in der sekundären Speicherkapazität gespeicherte Energie auf die primäre Speicherkapazität wenigstens teilweise zurückübertragen.

Darüber hinaus weist die Wandlerschaltung gemäß' der Erfindung den Vorteil auf, dass für die Speicherinduktivität lediglich einfache Drosseln benötigt werden. Insbesondere werden für die Wandlerschaltung gemäß der Erfindung keine Ringkerntransformatoren benötigt. Daher treten bei der erfindungsgemäßen Wandlerschaltung auch keine durch das magnetische Streufeld bedingten Energieverluste auf. Im übrigen ist es auch nicht erforderlich, Filterschaltungen vorzusehen, um die durch das Streufeld verursachten Spannungsspitzen abzufangen. Da zum Betrieb derartiger Filterschaltungen Energie benötigt wird, wirkt sich die Verwendung einfacher Drosseln in doppelter Hinsicht günstig auf den Wirkungsgrad aus.

Bei einer bevorzugten Ausführungsform der Erfindung ist vorgesehen, dass das primäre Schaltelement mit einem für eine am Netzanschluss anliegende Versorgungsspannung in Sperrrichtung gepoltem Diodenelement überbrückt ist, und dass das sekundäre Schaltelement mit einem für eine am Netzanschluss anliegende Versorgungsspannung in Flussrichtung gepolten Diode überbrückt ist.

Aufgrund der das primäre und das sekundäre Schaltelement überbrückenden Diodenelemente braucht das Schaltverhalten des primären und des sekundären Schaltelements nicht synchronisiert zu werden. Insbesondere kann die Spannung an der sekundären Speicherkapazität durch einfaches Betätigen des primären Schaltelements erhöht und durch Betätigen des sekundären Schaltelements gesenkt werden.

Bei einer bevorzugten Ausführungsform wird für die Speicherinduktivität eine Luftspule verwendet. Durch den Verzicht auf voluminöse Ferritkerne oder teuere nanokristalline magnetische Materialien können Kosten gespart und die Wandlerschaltungen insgesamt kleiner und leichter aufgebaut werden.

Weitere vorteilhafte Ausgestaltungen sind Gegenstand der abhängigen Ansprüche.

Nachfolgend wird die Erfindung im einzelnen anhand der beigefügten Zeichnung erläutert. Es zeigen:
- Figur 1: ein erstes Ausführungsbeispiel der Wandlerschaltung gemäß der Erfindung;
- Figur 2: ein zweites Ausführungsbeispiel einer Wandlerschaltung gemäß der Erfindung;
- Figur 3: ein Diagramm mit einer Darstellung der am primären und sekundären Schaltelement anliegenden Steuersignale und der an der sekundären Speicherkapazität anliegenden Spannung; und
- Figur 4: eine Messung einer an der sekundären Speicherkapazität anliegenden Spannung mit sinusförmigem Verlauf.

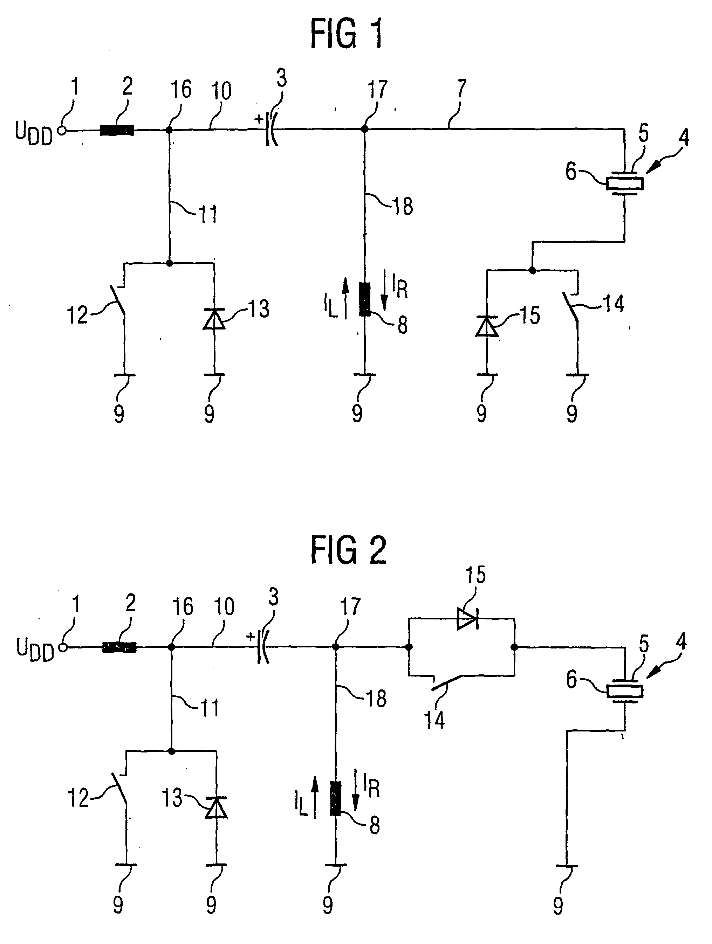

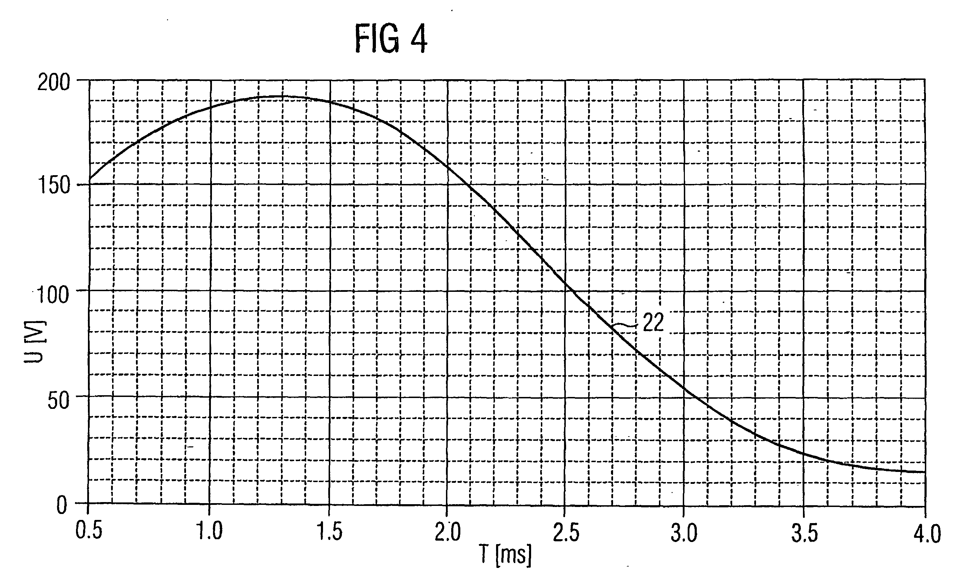

Die Wandlerschaltung in Figur 1 weist einen Netzanschluss 1 auf, dem eine Filterdrossel 2 nachgeschaltet ist. An ihrem dem Netzanschluss 1 abgewandten Ende ist die Filterdrossel 2 mit einer primären Speicherkapazität 3, beispielsweise einem Kondensator, und einer sekundären Speicherkapazität 4, beispielsweise einem Piezoaktor, verbunden. Diese Piezoaktoren weisen einen Stapel von jeweils zwischen Elektroden 5 eingebettetem piezoelektrischen Material 6 auf, dessen Ausdehnung sich beim Anlegen einer äußeren Spannung ändert. Der Einfachheit halber ist in Figur 4 nur eine einzelne Schicht des piezoelektrischen Materials mit den zugehörigen Elektroden 5 dargestellt.

An eine Leitung 7 zwischen der primären Speicherkapazität 3 und der sekundären Speicherkapazität 4 ist eine Speicherdrossel 8 angeschlossen, die mit ihrem der Leitung 7 abgewandten Ende an Masse 9 angeschlossen ist. Von einer die Filterdrossel 2 mit der primären Speicherkapazität 3 verbindenden Leitung 10 zweigt schließlich eine Leitung 11 ab, die zu einem primären Schaltelement 12 führt. Das primäre Schaltelement 12 ist mit seinem der Leitung 10 abgewandten Ende ebenfalls mit der Masse 9 verbunden. Ferner ist das primäre Schaltelement 12 mit einer Diode 13 überbrückt, die bei anliegender Versorgungsspannung UDD am Netzanschluss 1 in Sperrrichtung gepolt ist. In Reihe mit der sekundären Speicherkapazität 4 ist ein sekundäres Schaltelement 14 angeordnet, das ebenfalls mit der Masse 9 verbunden und mit einer Diode 15 überbrückt ist. In diesem Fall ist die Diode 15 bei anliegender Versorgungsspannung UDD am Netzanschluss 1 in Flussrichtung gepolt.

Nachfolgend wird die Funktion der Schaltung im einzelnen erläutert.

Beim Anlegen einer Versorgungsspannung UDD an den Netzanschluss 1 und bei geöffnetem primären Schaltelement lädt sich zunächst die primäre Speicherkapazität 3 auf, bis ein Knotenpunkt 16 zwischen den Leitungen 10 und 11 auf dem Potential UDD liegt. Ein Knotenpunkt 17 zwischen der Leitung 7 und einer zur Speicherdrossel 8 führenden Leitung 18 liegt zu diesem Zeitpunkt auf Massepotential.

Beim Schließen des primären Schaltelements 12 wird der Knotenpunkt 16 auf Massepotential gelegt. Dadurch wandert der Knotenpunkt 17 auf ein Potential -UDD, so dass durch die Speicherdrossel 8 ein Strom I_{L} über die Speicherdrossel 8, die primäre Speicherkapazität 3 und das primäre Schaltelement 12 fließt. Nach dem Öffnen des primären Schaltelements 12 hält die Speicherdrossel 8 den Strom I_{L} aufrecht und lädt dadurch die sekundäre Speicherkapazität 4 auf. Der Strom I_{L} fließt dabei über die sekundäre Speicherkapazität 4 und die Diode 15. Die sekundäre Speicherkapazität ist nun geladen, wobei die masseseitige Elektrode der Elektroden 5 auf negativem Potential unterhalb des Massepotentials liegt. Durch die Diode 15 wird daher ein Entladen der sekundären Speicherkapazität 4 verhindert.

Zum Entladen der sekundären Speicherkapazität 14 wird das sekundäre Schaltelement 14 geschlossen, so dass über das sekundäre Schaltelement 14, die sekundäre Speicherkapazität 4 und die Speicherdrossel 8 ein Strom I_{R} fließen kann. Nach Öffnen des sekundären Schaltelements 14 hält die Speicherdrossel 8 den Strom I_{R} aufrecht und lädt dadurch die primäre Speicherkapazität 3 auf. Dabei fließt ein Strom über die primäre Speicherkapazität 3 und die primäre Diode 13. Die in der sekundären Speicherkapazität 4 gespeicherte Ladung wird auf diese Weise wenigstens teilweise auf die primäre Speicherkapazität zurück übertragen. Die in der sekundären Speicherkapazität 4 gespeicherte Energie geht daher nicht vollständig verloren, sondern wird in die primäre Speicherkapazität 3 zurück gespeichert.

Die primäre Diode 13 und die sekundäre Diode 15 sind für die Funktion der Schaltung nicht unbedingt erforderlich. Es ist auch grundsätzlich denkbar, das primäre Schaltelement 12 und das sekundäre Schaltelement 14 durch eine geeignete Steuerung immer dann zu schließen, wenn Strom über das primäre Schaltelement 12 und das sekundäre Schaltelement 14 fließen soll, und immer dann zu öffnen, wenn die Verbindung zur Masse unterbrochen werden soll. Dies bedeutet jedoch einen erheblichen Schaltungsaufwand, so dass die in Figur 1 dargestellte Wandlerschaltung demgegenüber eine wesentlich einfachere Lösung darstellt.

Für das primäre Schaltelement 12 und das sekundäre Schaltelement 14 brauchen selbstverständlich keine mechanischen Schalter verwendet zu werden. Bei dem in Figur 1 dargestellten Ausführungsbeispiel kann beispielsweise für das primäre Schaltelement 12 ein npn-Bipolartransistor oder ein n-Kanal-Feldeffekttransistor verwendet werden. Für das sekundäre Schaltelement 14 in dem in Figur 1 dargestellten Ausführungsbeispiel kann für das sekundäre Schaltelement ein pnp-Bipolartransistor oder ein p-Kanal-Feldeffekttransistor verwendet werden.

Es sei angemerkt, dass anstelle der Bipolartransistoren und der Feldeffekttransistoren auch IGBTs (Isolated Gate Bipolar Transistor) verwendet werden können.

Für die Speicherdrossel 8 und die Filterdrossel 2 werden vorzugsweise Luftspulen verwendet, wobei der Wert der Induktivität der Filterdrossel 2 größer als der Wert der Induktivität der Speicherdrossel 8 sein sollte, um zu verhindern, dass Störimpulse in das Netz eingespeist werden. Die Verwendung von Luftspulen für die Speicherdrossel 8 und die Filterdrossel 2 hat den Vorteil, dass die Wandlerschaltung klein und kostensparend ausgeführt werden kann, da auf voluminöse oder teuere Magnetkerne verzichtet werden kann.

Die in Figur 1 dargestellte Wandlerschaltung kann sowohl als Aufwärts- als auch Abwärtswandler verwendet werden. Die Wandlerschaltung erlaubt es, mit nur einer Speicherdrossel 8 ohne Transformator eine Ausgangsspannung zu erzeugen, die sowohl größer als auch kleiner als die Versorgungsspannung ist. Im Experiment gelang es, mit Versorgungsspannungen zwischen 12 und 80 V Ausgangsspannungen zwischen 0 und 400 V zu erzeugen.

Weiterhin fließt bei der in Figur 1 dargestellten Wandlerschaltung sowohl der Strom I_{L} als auch der Strom I_{R} durch die Speicherdrossel 8. Durch eine einzige Strommessvorrichtung für den Strom durch die Speicherdrossel 8 kann daher die auf die sekundäre Speicherkapazität 4 auffließende Ladung sowie die von der sekundären Speicherkapazität 4 abfließende Ladung bestimmt werden.

In Figur 2 ist ein weiteres Ausführungsbeispiel einer Wandlerschaltung dargestellt. Bei diesem Ausführungsbeispiel ist im Vergleich zu dem in Figur 1 dargestellten Ausführungsbeispiel die Reihenfolge des Schaltelements 14 und der zugehörigen sekundären Diode 15 vertauscht. Dies ist vor allem für Anwendungen wichtig, bei denen die sekundäre Speicherkapazität 4 aus Sicherheitsgründen an die Masse 9 angeschlossen werden soll. Dadurch kann dann das Gehäuse eines als sekundäre Speicherkapazität 4 verwendeten Piezoaktors geerdet werden. Allerdings weist das in Figur 2 dargestellte Ausführungsbeispiel gegenüber dem in Figur 1 dargestellten Ausführungsbeispiel den Nachteil auf, dass für das sekundäre Schaltelement 14 ein sogenannter Highside-Schalter verwendet werden muss, da das sekundäre Schaltelement 14 potentialmäßig schwimmt.

Ansonsten gilt das zu dem in Figur 1 dargestellten Ausführungsbeispiel Gesagte entsprechend.

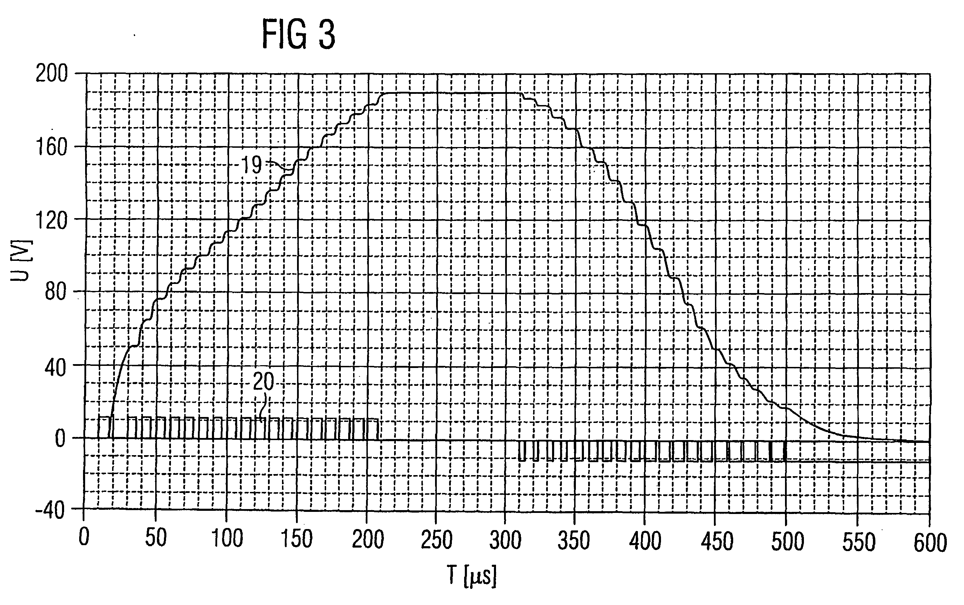

Figur 3 zeigt ein Diagramm, in dem eine Kurve 19 die an der sekundären Speicherkapazität 4 anliegende Spannung darstellt. Ferner sind in den Diagrammen in Figur 3 Steuerpulse 20 dargestellt, mit denen das primäre Schaltelement 12 betätigt wird. Außerdem sind im Diagramm in Figur 3 Steuerimpulse 21 dargestellt, die dazu dienen, das sekundäre Schaltelement 14 zu steuern. Über die Dauer der Steuerpulse 20 kann die Zunahme der Ladung in der sekundären Speicherkapazität 4 und damit die Spannung an der sekundären Speicherkapazität gesteuert werden. Die Dauer der Steuerimpulse 20 und 21 variiert dabei in Abhängigkeit vom Ladungszustand der sekundären Speicherkapazität 4 und vom gewünschten Spannungsanstieg. In gleicher Weise kann mit den Steuerpulsen 21 an dem sekundären Schaltelement 14 die Entladung der sekundären Speicherkapazität 4 gesteuert werden. Auch hier hängt die Dauer der Steuerimpulse 21 vom Ladungszustand der sekundären Speicherkapazität 14 und dem gewünschten Spannungsabfall ab.

Falls die Pulsdauer genügend klein gewählt wird, ergibt sich ein quasi kontinuierlicher Anstieg und Abfall der über der sekundären Speicherkapazität abfallenden Spannung. Ein solcher Fall ist in Figur 4 dargestellt, in der eine Kurve 22 den Spannungsverlauf an der sekundären Speicherkapazität 4 darstellt. Die Pulsrate lag dabei im Bereich von 100 kHz.

Mit den hier beschriebenen Wandlerschaltungen lässt sich aus den im Bordnetz eines Kraftfahrzeugs vorhandenen niedrigen Gleichspannungen präzise ein vorgegebener Spannungsverlauf an der sekundären Speicherkapazität 4 erzeugen. Dabei können ohne weiteres Spitzenspannungen im Bereich von mehreren 100 V erreicht werden. Von besonderem Vorteil ist dabei auch der hohe Wirkungsgrad der Schaltung, da die in der sekundären Speicherkapazität 4, also dem Piezoaktor, gespeicherte Energie zurückgewonnen werden kann. Da die in den Figuren 1 und 2 dargestellten Wandlerschaltungen auch ohne Transformator auskommen, sind bei der Wandlerschaltung auch keine Filter vorzusehen, die etwaige durch das Streufeld in einem Ringkern verursachte Spannungsspitzen dämpfen.

Wie bereits mehrfach erwähnt, eignet sich die Wandlerschaltung vor allem zum Betätigen von piezoelektrischen oder elektrostriktiven Bauelementen. Dies kann ein Piezoaktor zum Betätigen eines Injektionsventils in einem direkteinspritzenden Motor oder auch ein Piezomotor sein.

## Patentansprüche

1. Wandlerschaltung mit einer Speicherinduktivität (8), die mit einem Ende mit einem Referenzpotential (9) verbunden ist und die am entgegengesetzten Ende eingangsseitig an einen Netzanschluss (1) und ausgangsseitig an eine sekundäre Speicherkapazität (4) angeschlossen ist, die ausgangsseitig mit dem Referenzpotential (9) verbunden ist,
**dadurch gekennzeichnet,**
**dass** die Speicherinduktivität (8), über eine primäre Speicherkapazität (3) mit dem Netzanschluss (1) verbunden ist, die eingangsseitig über ein primäres Schaltelement (12) mit dem Referenzpotential (9) verbindbar ist, und
**dass** die sekundäre Speicherkapazität (4) in Reihe mit einem sekundären Schaltelement (14) geschaltet ist.

2. Wandlerschaltung nach Anspruch 1,
bei der das primäre Schaltelement (12) mit einem für eine am Netzanschluss (1) anliegende Versorgungsspannung in Sperrrichtung gepoltem Diodenelement (13) überbrückt ist.

3. Wandlerschaltung nach Anspruch 1 oder 2,
bei der das sekundäre Schaltelement (14) mit einem für eine am Netzanschluss (1) anliegende Versorgungsspannung in Flussrichtung gepoltem Diodenelement (15) überbrückt ist.

4. Wandlerschaltung nach einem der Ansprüche 1 bis 3,
bei der die Speicherinduktivität (8) eine Luftspule ist.

5. Wandlerschaltung nach einem der Ansprüche 1 bis 4,
bei der zwischen Netzanschluss (1) und primärer Speicherkapazität (3) eine Filterinduktivität (2) geschaltet ist.

6. Wandlerschaltung nach Anspruch 5,
bei der die Filterinduktivität (2) eine Luftspule ist.

7. Wandlerschaltung nach einem der Ansprüche 1 bis 6,
bei der der Wert der Induktivität der Filterinduktivität (2) größer als der Wert der Induktivität der Speicherinduktivität (8) ist.

8. Wandlerschaltung nach einem der Ansprüche 1 bis 7,
bei der das primäre Schaltelement (12) ein npn-Bipolartransistor ist.

9. Wandlerschaltung nach einem der Ansprüche 1 bis 8,
bei der das sekundäre Schaltelement (14) ein pnp-Bipolartransistor ist.

10. Wandlerschaltung nach einem der Ansprüche 1 bis 9,
bei der die sekundäre Speicherkapazität (4) ein elektrostriktives Bauelement ist.

11. Wandlerschaltung nach einem der Ansprüche 1 bis 9,
bei der die sekundäre Speicherkapazität (4) ein Piezoelement ist.

12. Wandlerschaltung nach Anspruch 11,
bei der das Piezoelement (12) ein zum Betätigen von Ventilen in einem Verbrennungsmotor geeigneter Piezoaktor ist.

13. Wandlerschaltung nach Anspruch 11 oder 12,
bei dem das Piezoelement (12) ein in Mehrschichttechnik gefertigter Piezoaktor ist.

## Claims

1. Converter circuit with a storage inductor (8), one end of which is connected to a reference potential (9) and the opposite end input is connected to a supply connection (1) and the output end to a secondary storage capacitor (4), the output end of which is connected to the reference potential (9),
**characterised in that**
the storage inductor (8) is connected to the supply connection (1) via a primary storage capacitor (3), which on the input side can be connected to the reference potential (9) via a primary switching element (12) and
the secondary storage capacitor (4) is connected in series with a secondary switching element (14).

2. Converter circuit in accordance with claim 1,
whereby the primary switching element (12) is bridged by a diode element (13) polarised in the reverse direction for a supply voltage present at the supply connection (1).

3. Converter circuit in accordance with claim 1 or 2,
whereby the secondary switching element (14) is bridged by a diode element (15) polarised in the forward direction for a supply voltage present at the supply connection (1).

4. Converter circuit in accordance with one of claims 1 to 3, whereby the storage inductor (9) is an air-core inductor.

5. Converter circuit in accordance with one of claims 1 to 4, whereby a filter reactor (2) is connected between the supply connection (1) and primary storage capacitor (3).

6. Converter circuit in accordance with claim 5,
whereby the filter reactor (2) is an air-core inductor.

7. Converter circuit in accordance with one of claims 1 to 6,
whereby the value of the inductance of the filter reactor (2) is greater than the value of the inductance of the storage inductor (8) .

8. Converter circuit in accordance with one of claims 1 to 7,
whereby the primary switching element (12) is an npn bipolar transistor.

9. Converter circuit in accordance with one of claims 1 to 8,
whereby the secondary switching element (14) is a pnp bipolar transistor.

10. Converter circuit in accordance with one of claims 1 to 9,
whereby the secondary storage capacitor (4) is an electrostrictive component.

11. Converter circuit in accordance with one of claims 1 to 9,
whereby the secondary storage capacitor (4) is a piezoelectric element.

12. Converter circuit in accordance with claim 11,
whereby the piezoelectric element (12) is a piezoelectric actuator suitable for actuating valves in an internal combustion engine.

13. Converter circuit in accordance with claim 11 or 12,
whereby the piezoelectric element (12) is a piezoelectric actuator manufactured using multilayer technology.

## Revendications

1. Transducteur comportant une inductance de stockage (8), qui est reliée par une extrémité à un potentiel de référence (9) et qui est connectée par l'extrémité opposée du côté de l'entrée à un port d'alimentation (1) et du côté de la sortie à une capacité de stockage (4) secondaire, qui est reliée du côté de la sortie au potentiel de référence (9),
**caractérisé en ce que**,
l'inductance de stockage (8) est reliée au port d'alimentation (1) par une capacité de stockage (3) primaire, laquelle peut être reliée du côté de l'entrée au potentiel de référence (9) par un élément de commutation (12) primaire, et
**en ce que** la capacité de stockage (4) secondaire est branchée en série avec un élément de commutation (14) secondaire.

2. Transducteur selon la revendication 1,
dans lequel l'élément de commutation (12) primaire est raccordé à un élément de diode (13) polarisé en sens de blocage par rapport à une tension d'alimentation au niveau du port d'alimentation (1).

3. Transducteur selon la revendication 1 ou 2,
dans lequel l'élément de commutation secondaire (14) est raccordé à un élément de diode (15) polarisé en sens direct par rapport à une tension d'alimentation au niveau du port d'alimentation (1).

4. Transducteur selon une des revendications 1 à 3,
dans lequel l'inductance de stockage (8) est une bobine à air.

5. Transducteur selon une des revendications 1 à 4,
dans lequel une inductance de filtre (2) est branchée entre le port d'alimentation (1) et la capacité de stockage (3) primaire.

6. Transducteur selon la revendication 5,
dans lequel l'inductance de filtre (2) est une bobine à air.

7. Transducteur selon une des revendications 1 à 6,
dans lequel la valeur de l'inductance de filtre (2) est supérieure à la valeur de l'inductance de stockage (8).

8. Transducteur selon une des revendications 1 à 7,
dans lequel l'élément de commutation primaire (12) est un transistor bipolaire npn.

9. Transducteur selon une des revendications 1 à 8,
dans lequel l'élément de commutation secondaire (14) est un transistor bipolaire pnp.

10. Transducteur selon une des revendications 1 à 9,
dans lequel la capacité de stockage secondaire (4) est un composant électrostrictif.

11. Transducteur selon une des revendications 1 à 9,
dans lequel la capacité de stockage secondaire (4) est un élément piézo-électrique.

12. Transducteur selon la revendication 11,
dans lequel l'élément piézo-électrique (12) est un actionneur piézo-électrique approprié pour actionner des soupapes dans un moteur à combustion.

13. Transducteur selon la revendication 11 ou 12,
dans lequel l'élément piézo-électrique (12) est un actionneur piézo-électrique fabriqué selon la technique multicouche
